# EUROPEAN PATENT APPLICATION

(11) **EP 1 584 846 A2**
(43) Date of publication of application: **12.10.2005**
(21) Application number: 05007092.9
(22) Date of filing: 31.03.2005
(51) Int. Cl.: F16H 55/48

(54) **Pulley and power transmission device using the same**

(30) Priority: 05.04.2004 JP 2004111281
(71) Applicant: Calsonic Kansei Corporation, Tokyo 164-8602 (JP)
(72) Inventor: Uehara, Katsumi, Nakano-ku Tokyo 164-8602 (JP); Higashihara, Shinichiro, Nakano-ku Tokyo 164-8602 (JP); Kumakura, Shingo, Nakano-ku Tokyo 164-8602 (JP); Umemura, Yukio, Nakano-ku Tokyo 164-8602 (JP)
(74) Representative: Grünecker, Kinkeldey, Stockmair & Schwanhäusser Anwaltssozietät

(57) **Abstract**

A pulley is configured to receive a torque from a drive source for rotation. The pulley (20) includes a resinous pulley body (21) having a belt engagement portion (21a) on the outer periphery of the pulley body. The pulley includes a base plate (23) integrally provided to a pin (24) protruding from the pulley body at a predetermined position to engage another member (12) other than the pulley and being insert molded within the pulley body.

## Description

### CROSS-REFERENCE TO RELATED APPLICATIONS

This application is based upon and claims the benefit of priority from Japanese Patent Application No. 2004-111281 filed on April 5, 2004; the entire contents of which are incorporated herein by reference.

### BACKGROUND OF THE INVENTION

### 1. Field of the Invention

The present invention relates to a pulley and a power transmission device using the same, and more specifically to a pulley and a power transmission device, which are suitable for use in driving a compressor built in a refrigeration cycle of a car air conditioner.

### 2. Descriptions of the Related Arts

For example, a power transmission device having a torque limiter function is disclosed in Japanese Patent Laid-Open No. Hei 8 (1996)-135752. This power transmission device includes a pulley as a driving-side rotation member driven upon receipt of power from an engine. The power transmission device includes a hub as a driven-side rotation member, which is disposed coaxially in parallel with the pulley and rotatably driven by the pulley. The pulley and the hub have an engaging mechanism having a torque limiter function therebetween. The engaging mechanism links the pulley and the hub and transmits rotation torque to the hub during normal driving. The engaging mechanism releases the link between the pulley and the hub during an abnormal time, for example, at the time of locking due to seizing failure of a compressor. Thus, breakages of other portions in the power transmission device are prevented during the abnormal time.

To be concrete, the engaging mechanism includes a metallic pin pressed into a press hole of the pulley made of metal. The engaging mechanism includes a metallic holding member fixed to the hub. The engaging mechanism includes an elastic body that is linked to the pin and held in a clearance of the holding member. During normal driving, the elastic body links the hub and the pulley while being held in the clearance of the holding member. During abnormal driving, the elastic body is deformed elastically, and slips through the clearance of the holding member to release the link between the hub and the pulley

In this device, if the pulley made of a metal is changed to a pulley made of a resin, the device is preferably lightened. However, extremely large rotation torque is applied to the pin provided in the pulley. Accordingly, there is no other choice but to adopt a pulley made of metal in terms of the structure of the device, in order to use the device over a prolonged period so that the pin does not fall down even if the large rotation torque is applied to the pin. For this reason, a change from the metallic pulley to the resin pulley has not been considered.

On the condition that the device has a structure that the press hole for pressing the pin thereinto is provided in the resin pulley and the pin is pressed thereinto, even if a design precision of the pin and press hole is made extremely high, sufficient fastening power can not be obtained due to difference of a thermal shrinkage factor between the pin and the resin pulley. If a resin pulley is adopted, which is made in such a manner that pins are located in predetermined positions in a metal mold and then resin is injected into the metal mold to be insert molded, the fastening power between the resin pulley and the pins decreases by shrinkage of the melted resin at the time the resin solidified.

### SUMMARY OF THE INVENTION

An object of the invention is to provide a pulley made of a resin in which a pin does not fall down even when a large rotation torque is applied thereto.

The first aspect of the invention provides a pulley configured to receive a torque from a drive source for rotation. The pulley includes a resinous pulley body having a belt engagement portion on the outer periphery of the pulley body. The pulley includes a base plate integrally provided to a pin protruding from the pulley body at a predetermined position to engage another member other than the pulley and being insert molded within the pulley body.

The second aspect of the invention provides a power transmission device. The device includes a pulley as a driving-side rotation member to receive a torque from a drive source for rotation. The device includes a driven-side rotation member arranged coaxially parallel to the pulley to be rotatably driven by the pulley. The device includes a link mechanism. The link mechanism includes a pin protruding from the pulley toward the driven-side rotation member. The link mechanism includes a link member provided to the driven-side rotation member and engaging the pin of the pulley. The link mechanism transmits a driving force form the pulley to the driven-side rotation member. The link mechanism cuts off the driving force to be transmitted when the driven-side rotation member has a drive load over a predetermined value. The pulley includes a resinous pulley body having a belt engagement portion on the outer periphery of the pulley body. The pulley includes a base plate integrally provided to a pin protruding from a pulley body at a predetermined position to engage another member other than a pulley and being insert molded within the pulley body

Two or more pins may protrude from the base plate.

The base plate may include a protrusion piece protruding in a direction crossing a direction of rotating the pulley.

The pulley may include a bearing as an insert component located on the inner periphery of the pulley and insert molded within the pulley body. The base plate has a fitting-into opening having the outer periphery of the bearing fitted thereinto. The base plate and the bearing as insert components are insert molded within the pulley body, with the base plate and the bearing fitted with each other.

The base plate may have windows.

The base plate and the bearing may include engagement portions engaging with each other for preventing relative rotation between the base plate and the bearing. The base plate and the bearing as insert components are insert molded within the pulley body, with the base plate and the bearing joined each other.

According to the first and second aspects, unlike in the case of a structure where pins are merely insert molded in a pulley main body, the structure is adopted, where the base plate having the pins provided integrally therewith is insert molded in the pulley main body In this structure, the base plate functions as a base of the pins within the pulley main body, thus enhancing connection strength between the pins and the pulley main body. Therefore, even when a large load is applied to the pins from another member, this structure prevents the pins 24 from falling down out of the pulley main body made of resin, and from coming off out of the pulley main body. The structure achieves lighter resin pulley, with abolishing a metallic pulley, and a lighter power transmission device.

The pins protruding from the base plate does not require insert molding of separately retained pins in the pulley main body, thus facilitating manufacture of the pulley.

The base plate includes the protrusion piece protruding in the direction crossing the rotation direction of the pulley, and the structure enhances rotation-preventing force of the base plate within the pulley body, thus providing a structure where the pin hardly falls down.

The fitting-into opening of the base plate serves as a positioning guide of the base plate, thus facilitating the positioning of the pins.

The windows formed to the base plate allow melted resin to flow through the windows of the base plate if the base plate exists within the metal mold during the insert molding, thus suppressing deterioration in flowability of the melted resin as low as possible. The structure enhances connection strength between the pulley main body and the base plate

The base plate and the bearing include engagement portions engaging each other to prevent relative rotation between the base plate and the bearing, and the base plate and the bearing are insert-molded as insert components, with the base plate and the bearing connected. Therefore, the bearing and the base plate are mechanically connected before they are molded with a resin. In other words, in the pulley made of a resin, the base plate functions as a flange portion protruding from the external circumference of the bearing. This structure enlarges a contact area of the pulley main body and the bearing, thus enhancing the connection strength between the bearing and the pulley body

### BRIEF DESCRIPTION OF THE ACCOMPANYING DRAWINGS

Fig. 1 is a aide view of a substantial part of a power transmission structure according to a first embodiment of the present invention;
Fig. 2 is a longitudinal section view of a power transmission device of Fig. 1;
Fig. 3 is a schematic perspective view of a resin pulley used for the power transmission device of Fig. 1;
Figs. 4A and 4B are perspective views illustrating an assemble state of a bearing and a board as an insert component;
Fig. 5 is an illustrative view of an assemble method of the power transmission device of Fig. 1;
Fig. 6 is a side view illustrating a substantial part of the power transmission device of Fig. 1 after power shutoff;
Fig. 7 is a perspective view illustrating a first modification of a pulley board of Fig. 3;
Fig, 8 is a perspective view illustrating a second modification of the pulley board of Fig. 3;
Figs. 9A, 9B and 9C are section views illustrating a structural example of a pin of the board of Fig. 3;
Fig. 10 is a section view illustrating a pulley of another embodiment;
Fig. 11A and 11B are illustrative views for schematically explaining an assemble state of a board and a bearing insert molded into the pulley of Fig. 10;
Fig. 12 is a view for illustrating an appearance as a comparison example, which shows that a pin is insert molded with a resin; and

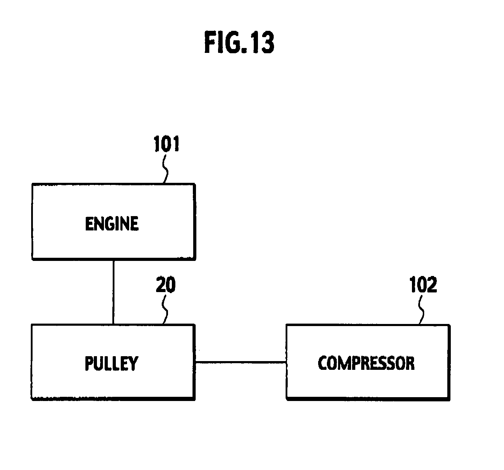

Fig. 13 is a block diagram illustrating a compressor system using the power transmission structure of Fig. 1.

### DETAILED DESCRIPTION OF THE PREFERRED EMBODIMENTS

Embodiments of the invention will be described with reference to drawings.

### First Embodiment

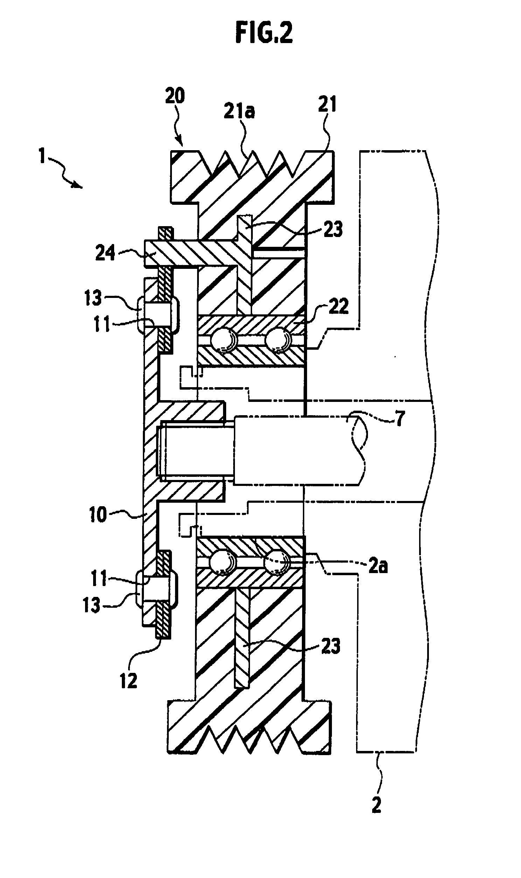

An entire structure of a power transmission device 1 will be described. In Fig. 2, a housing 2 of a clutchless compressor (driven-side rotation member) is provided, and a pulley 20 (driving-side rotation member) is rotatably supported by a boss portion 2a of the housing 2. The housing 2 houses a rotation shaft 7 that is coaxially located with respect to the boss portion 2a and protrudes to the outside from the boss portion 2a. The rotation shaft 7 has an end portion, and a hub 10 (driven-side rotation member) is fixed to the end portion thereof

The hub 10 has a plurality of pin insertion holes 11 at predetermined intervals (120 ° in this embodiment) on the identical circumference locating the rotation shaft 7 at the center. The pin insertion holes 11 have cylindrical pins 13, a respective one of which is fixed to a corresponding one of the pin insertion holes 11, while passing through the hole 11.

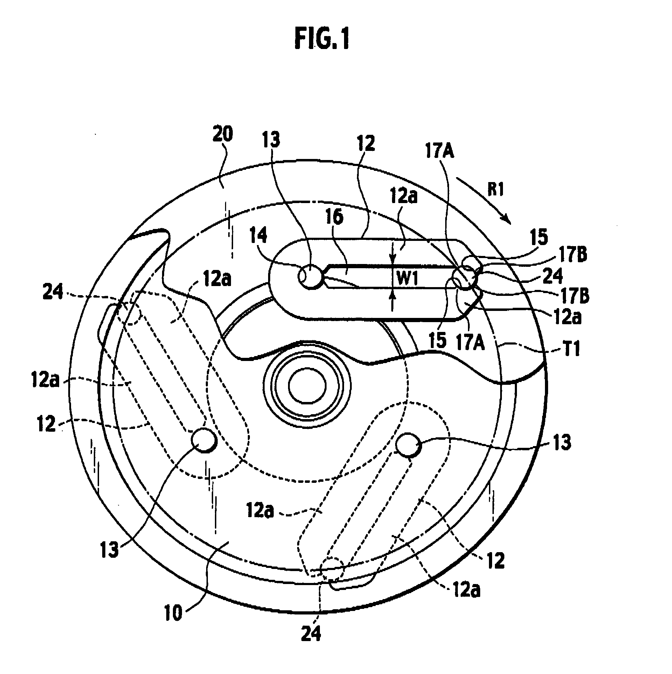

As illustrated in Fig. 1, the pulley 20 has a plurality of cylindrical pins 24 (three pieces in this embodiment) that stand on one end face thereof (on a hub side). The pins 24 are located at predetermined angular intervals (120' in this embodiment) on the identical circumference locating the center point of the pulley 20 at the center. A respective one of the pins 24 of the pulley 20 is linked to a corresponding one of the pins 13 of the hub 10 by use of a link member 12.

The link member 12 has a leaf spring-like shape fabricated from a spring material such as high carbon steel. The link member 12 is formed by stacking one or more plate members M, which are punched off into a predetermined shape so as to have the identical shape and size, in the thickness direction (see Fig. 1). Although the number of the plates M is two in this embodiment, the number of the plate members M may be one. This link member 12 has a forked shape, and includes a pair of opposed side pieces 12a with a slit-like clearance 16 interposed therebetween. The link member 12 has a through-hole 14 on the linking end side. The through-hole 14 is formed so as to communicate with the clearance 16 and contacts the external periphery of the pin 13 for rotatably engaging with the pin 24 . The link member 12 has, on the open-end side, pinching portions 15that are formed in the tip portions of the side pieces 12a and retain the pin 24 therebetween. Each of the pinching portions 15 is structured as a concave curve plane 15 formed along the external periphery of the pin 24. This concave curve plane 15 has, at both ends, convex portions 17A and 17Bthat contact the external periphery of the pin 24. The convex portions 17A and 17B are formed so as to have a convex circular shape, and only the convex portions 17A and 17B in each of the concave curve portions 15 contact the external periphery of the pin 24. Portions of the concave curve plane 15 other than the convex portions 17A and 17B have a clearance from the external periphery of the pin 24. The distance L1 between the convex portions 17A and 17A on the link end side (base end side) is larger than the distance L2 between the convex portions 17B and 17B on the opening end side (tip end side). The clearance 16 between the pair of side pieces 12a has the width W1 that is slightly larger than the diameter of the external periphery of the pin 24., allowing the pin 24 to be movably housed therein.

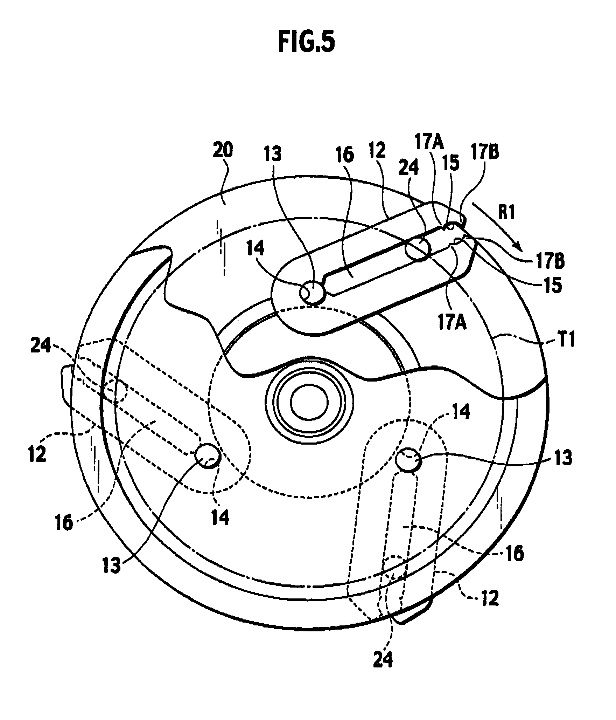

When the pulley 20 and the hub 10 are linked in an assembly step of the power transmission device 1, the link member 12 links the pin 24 of the pulley 20 and the pin 13 of the hub 10 to each other. To be concrete, the pin 13 is first fitted into the through-hole 14 of the link member 12 as shown in Fig. 5, and the pin 24 is inserted in the clearance 16 of the link member 12. Subsequently, in a state where the hub 10 is fixed so as not to be rotated, the pulley 20 is rotated (in the arrow direction R1). The rotation allows the pin 24 in the clearance 16 to move to the open-end side, and the pin 24 is pressed into the pinching portions 15 on the open -end side. Thus, the pin 24 elastically deforms the side-pieces 12a of the link member 12 to be separate from each other, and the pin 24 is pressed between the pinching portions 15. Finally, the side-pieces 12a of the link member 12 are elastically restored to an original shape thereof with the pin 24retained between the pinching portions 15 of the link member 12 as shown in Fig. 1.

Next, the operation of the power transmission device structured as above will be described. A power of an engine 101 shown in Fig. 18 is transmitted to the pulley 20 using a belt (not shown), and the pulley 20 is rotated. The rotation of the pulley 20 is transmitted to the hub 10 through the pin 24, the link member 12 and the pin 13, permitting the rotation shaft 7 to be rotated. The rotation provides the power of the engine as a driving machine to a compressor 102 as a driven machine for operation.

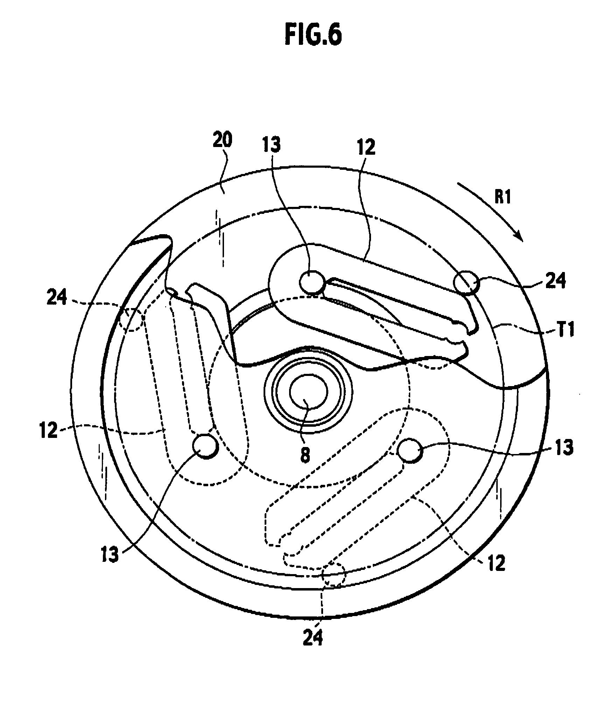

When seizure and the like are produced within the compressor, causing a load torque to exceed a predetermined value, the pin 24 retained by the pinching portions 15 of each link member 12 spreads out the side pieces 12a of the link member 12 from each other to separate from the link member 12. This separation cuts off transmission of the power from the pulley 20 to the rotation shaft 7 for idling the pulley 20 (see Fig. 6), without any damage to other portions of the power transmission device 1 in addition to the compressor and the engine.

Herein, operation and benefits achieved by using the link member 12 will be described.

The link member 12 has a structure in which only the convex portions 17A and 17B formed in the tips of the pinching portions 15 retaining the pin 24 therebetween contact the external periphery of the pin 24. This structure permits the pin 24 to be securely retained without wobbling. This structure prevents occurrence of noisy sound and wear of the link member 12. This structure advantageously stabilizes a force to separate the pin 24 retained between the pinching portions 15 toward the open-end side.

The convex portions 17A and 17B have a structure that they are formed in the convex circular shape and have a point contact with the external periphery of the pin 24. This structure advantageously reduces wear of the convex portions 17A and 17B, thus hardly varying force in magnitude to separate the pin 24 from the convex portions 17A and 17B.

This structure is that the distance L1 between the convex portions 17A on the link end side is larger than the distance L2 between the convex portions 17B and 17B on the open end side. Therefore, the force for opening the side pieces 12a from each other to press the pin 24 inserted in the clearance 16 between the curve planes 15 and 15, is smaller than the force for opening the side pieces 12a from each other to separate the pin 24 retained between the curve planes 15 and 15 toward the open end side.

The link member 12 has a structure where the clearance 16 extending from the open-end side to the link the end side of the member 12 communicates with the through-hole 14 on the link end side. Therefore, when in a linking step, the pin 24 inserted in the clearance 16 is pressed between the pinching portions 15 provided on the open end side of the clearance 16, the link member 12 deforms over the entire length. This reduces size of the link member 12 .

The link member 12 has a structure constructed by stacking the plurality of plate members M (two in this embodiment) in the thickness direction. The structure facilitates a punching step for the plate member M constituting the link member 12, thus improving workability and is hard to produce burr, deformation and the like, for improvement in the dimensional precision of the link member 12.

The pulley 20 of this embodiment is a resin pulley, and descriptions for the pulley 20 will be described in detail.

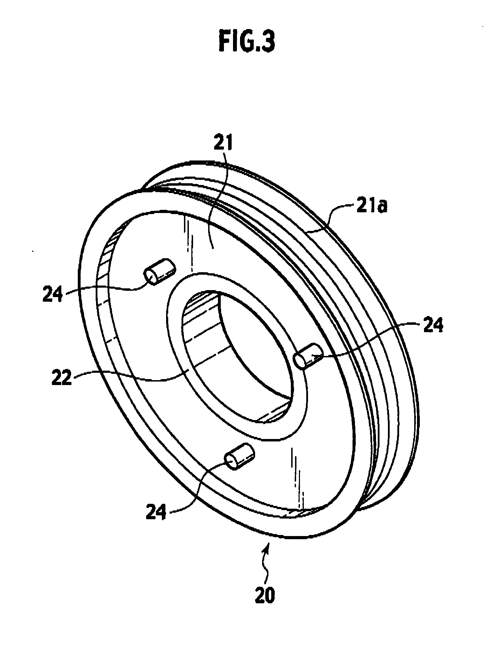

The pulley 20 of this embodiment includes a pulley main body 21 made of a resin, which has a belt engagement portion 21a in the external periphery, as shown in Figs. 2 and 3. The pulley 20 includes a bearing 22 as an insert component that is located on the internal periphery side and is insert molded integrally therewith in the pulley main body 21. Similarly, the pulley 20 includes a metallic base plate 23 as an insert component that is insert molded integrally therewith in the pulley main body 21.

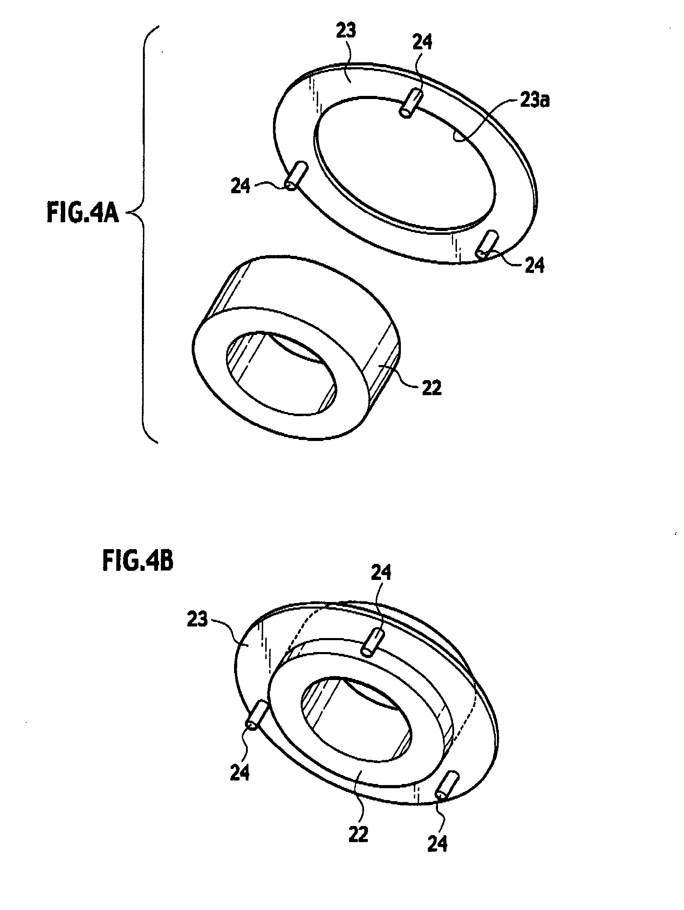

The base plate 23 is a metallic plate in which the plurality of pins 24 (three in this embodiment) engaging with the link member 12 are formed integrally therewith as shown in Fig. 2 and Fig. 4A. As shown in Fig. 4A, the base plate 23 has an annular circular plate having at the central portion a fitting-into opening 23a, into which the external periphery of the bearing 22 is to be fitted.

The insert-molded member composed of the metallic bearing 22, the base plate 23 and the resin pulley main body 21 is made in the following manner. As shown in Fig. 4B, an assembled product produced by fitting of the bearing 22 into the base plate 23 is previously located within a metal mold for injection molding (not shown) as an insert component, and a resin is injected into the metal mold. Subsequently, the resinous pulley main body 21, the metallic bearing 22 and the base plate 23 are united with each other.

Benefits of this embodiment will be described below.

First, according to this embodiment, unlike in the case of a structure where pins are merely insert molded in a pulley main body, the structure is adopted, where the base plate 23 having the pins 24 provided integrally therewith is insert molded in the pulley main body 21. In this structure, the base plate 23 functions as a base of the pins 24 within the pulley main body 21, thus enhancing connection strength between the pins 24 and the pulley main body 21. Therefore, even when a large load is applied to the pins 24 from other members (the link member 12 in this embodiment), this structure prevents the pins 24 from falling down out of the pulley main body 21 made of resin, and from coming off out of the pulley main body 21. The structure achieves the resin pulley 20 lighter than a metallic pulley, thus reducing weight of the power transmission device 1.

As an additional benefit, provision of the pins 24 integrally with the base plate 23 facilitates positioning of the pins 24 by use of the base plate 23 as a guide. The base plate 23 functions as a skeleton member of the pulley main body 21. Accordingly, increase in the strength of the pulley main body 21 is also expected.

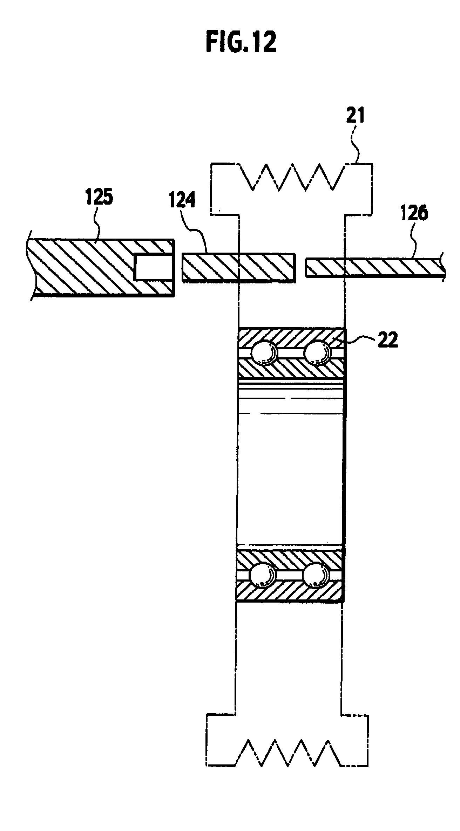

Secondly, this embodiment has a structure in which the plurality of pins 24 are provided so as to protrude from the base plate 23. This structure eliminates necessity to insert mold the plurality of pins 24 to the pulley main body while retaining the pins 24 separately, thus facilitating manufacture of the pulley. As a comparison example, Fig. 12 is an example in which pins 124 are insert molded to the pulley main body 21, with the pins 124 separately retained. In such a case, it is necessary to use positioning pins 125 and 126 for retaining both ends of the respective pins 124 for each pin 124, thus rendering a metal insert mold complicated In Fig. 12, only one pin 124 is illustrated as a representative of the pins 124, and illustrations of other pins 124 are omitted.

Thirdly, this embodiment has a structure where the base plate 23 includes the fitting-into opening 23a for fitting the external periphery of the bearing 22 thereinto. In this structure, the fitting-into opening 23a of the base plate 23 serves as a positioning guide of the base plate 23, thus further facilitating the positioning of the pins 24. Particularly, the embodiment enhances coaxility of the pulley main body 21, the bearing 22 and the pins 24.

Next, modifications of the base plate will be described.

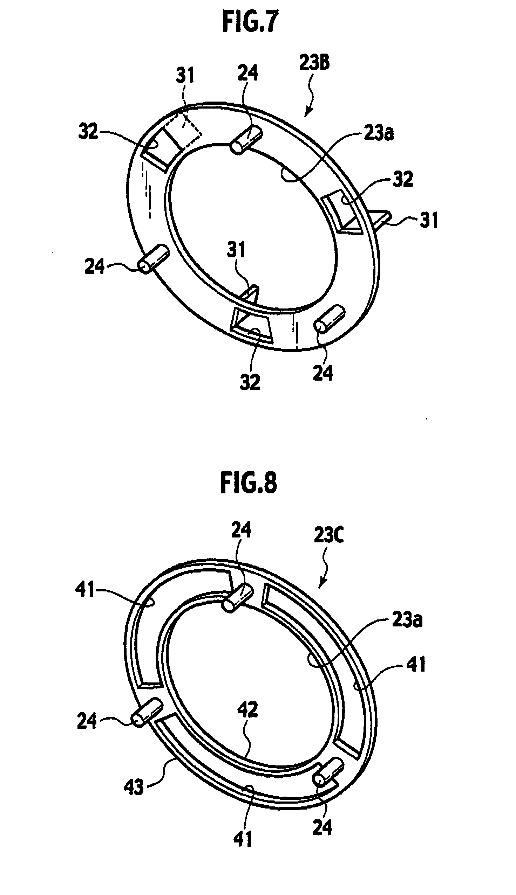

Fig. 7 is a first modification of the base plate. The base plate 23B of the first modification includes protrusion pieces 31 protruding in the direction crossing the rotation direction of the pulley 20 (normal to the rotation direction in this modification, i.e., the axial direction). These protrusion pieces 31 are formed by punching out parts of the base plate 23B, which is a metallic plate as a material, into approximately like a letter "U", and by bending the parts thereof to the outside erectly. The punched-out parts by the bending serve as windows 32. When this base plate 23B of the first modification is used, the base plate 23B is structured with the protrusion pieces 31 that protrude in the direction crossing the rotation direction of the pulley 20. This structure increases a force to prevent a rotation of the base plate 23B in the pulley main body 21, thus hardly falling down the pins 24.

Fig. 8 is a second modification of the base plate. The base plate 23C of the second modification has a structure where a plurality of windows 41 (three in this modification) are formed. The windows 41 are formed as a fan along the circumferential direction of the base plate 23C, and thus the base plate 23C includes an internal periphery portion 42 and an external periphery portion 42, which are opposite to each other with the windows 41 interposed therebetween.

The use of the base plate 23C of this second modification decreases the volume of the base plate 23C made of metal that mounts weight, thus further lightening the pulley 4 and the power transmission device 1. When the base plate 23C of the second modification is used, melted resin flows through the windows 41 of the base plates 23C even if the base plate 23C exists in a metal mold during the insert molding. Therefore, deterioration in flowability of the melted resin due to the existence of the base plate in the metal mold is suppressed as low as possible. The second modification has also a benefit that the connection strength between the pulley main body 21 and the base plate 23C is enhanced.

### Second Embodiment

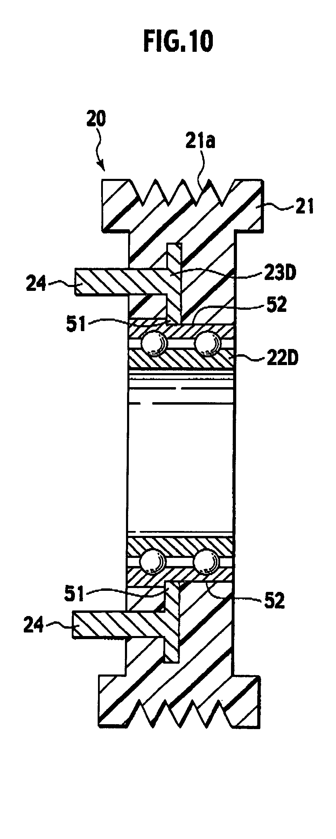

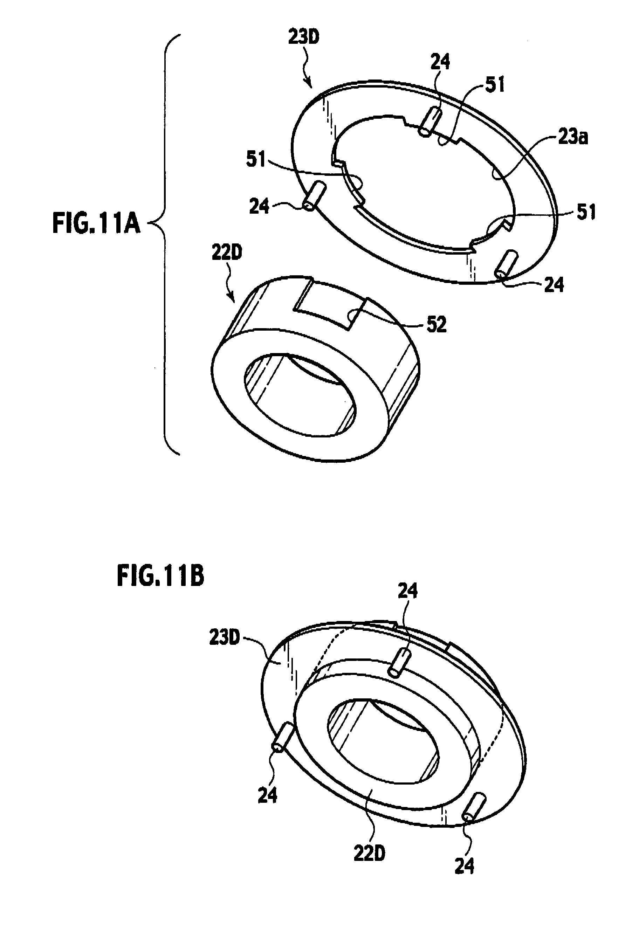

Figs. 10, 11A and 11B show a pulley 20 of a power transmission device according to a second embodiment of the invention. The pulley 20 of the second embodiment includes engaging portions 51 and 52 in the base plate 23D and the bearing 22D. The engaging portions 51 and 52 engage with each other to prevent a relative rotation therebetween. More specifically, engaging convex portions 51 protrude radially inwardly from the periphery of the fitting-into opening 23a of the base plate 23D, and the convex portions 51 are arranged at equal intervals in the circumferential direction of the base plate 23D. On the other hand, engaging concave portions 52 are concaved radially inwardly on the external circumference of an external wheel of the bearing 22D, and the engaging concave portions 52 are arranged at equal intervals in the circumferential direction of the bearing 22D.

According to the second embodiment, in addition to the benefits of the first embodiment, the structure is that both members 23D and 22D are insert molded as insert components, with the base plate 23D and the bearing 22D connected. Therefore, as shown in Fig, 11B, the bearing 22D and the base plate 23D are mechanically connected before they are molded with a resin. In other words, in the pulley 21 made of a resin, the base plate 23D functions as a flange portion protruding from the external circumference of the bearing 22D. This structure enlarges a contact area of the pulley main body 21 and the bearing 22D, thus enhancing the connection strength between the bearing 22D and the pulley main body 21. Thus, the pins 24 are made to fall down more hardly by virtue of this structure.

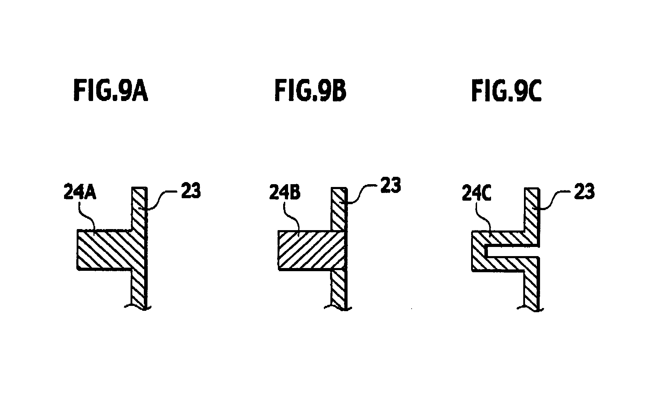

In the first and second embodiments, the pins 24A and the base plate 28 were integrally molded as shown in Fig. 9A. While, the invention is not limited to this, and the pin 24B may be jointed to the base plate 23 by welding, as shown in Fig. 9B. As shown in Fig. 9C, the pin 24C may protrude from the base plate 23 by press working while taking a hollow cylindrical shape. The example shown in Fig. 9A has a merit that strength of the pin 24A is maintained at a high level. The example shown in Fig. 9B has a benefit that the conventional pin 24B can be diverted without any adjustment The example of Fig. 9C is advantageous that it is desired to allow the external circumference shape of the pin 24C to have slight flexure.

In the embodiments, the fork-shaped link member 12 is used as the link member. On the other hand, in the present invention, other link members may be used. Alternatively, other linking means may be used.

In the embodiments, the descriptions were made by exemplifying the power transmission device in which the hub (driven-side rotation member) fixed to the rotation shaft of the compressor of the car air conditioner and the pulley (driving-side rotation member) rotating by the engine are linked. While, the invention may be applied to a power transmission device that links another driven-side rotation members and the driving-side rotation member to each other.

In the embodiment, the pulley used for the power transmission device was described. While, the present invention can be applied to a pulley used for another devices.

Although the invention has been described above by reference to certain embodiments of the invention, the invention is not limited to the embodiments described above. Modifications and variations of the embodiments described above will occur to those skilled in the art, in light of the above teachings. The scope of the invention is defined with reference to the following claims.

## Claims

1. A pulley configured to receive a torque from a drive source for rotation, comprising:
a resinous pulley body having a belt engagement portion on the outer periphery of the pulley body; and
a base plate integrally provided to a pin protruding from the pulley body at a predetermined position to engage another member other than the pulley and being insert molded within the pulley body.

2. The pulley according to claim 1, wherein two or more pins protrude from the base plate.

3. The pulley according to claim 1, wherein the base plate include a protrusion piece protruding in a direction crossing a direction of rotating the pulley

4. The pulley according to claim 1,
wherein the pulley comprises a bearing as an insert component located on the inner periphery of the pulley and insert molded within the pulley body,
wherein the base plate has a fitting-into opening having the outer periphery of the bearing fitted thereinto,
wherein the base plate and the bearing as insert components are insert molded within the pulley body, with the base plate and the bearing fitted with each other.

5. The pulley according to claim 1, wherein the base plate has windows.

6. The pulley according to claim 1,
wherein the base plate and the bearing include engagement portions engaging with each other for preventing relative rotation between the base plate and the bearing,
wherein the base plate and the bearing as insert components are insert molded within the pulley body, with the base plate and the bearing joined each other.

7. A power transmission device comprising:
a pulley as a driving-side rotation member to receive a torque from a drive source for rotation;
a driven-side rotation member arranged coaxially parallel to the pulley to be rotatably driven by the pulley; and
a link mechanism comprising:
a pin protruding from the pulley toward the driven-side rotation member; and
a link member provided to the driven-side rotation member and engaging the pin of the pulley,
wherein the link mechanism transmits a driving force form the pulley to the driven-side rotation member,
wherein the link mechanism cuts off the driving force to be transmitted when the driven-side rotation member has a drive load over a predetermined value,
wherein the pulley comprises:
a resinous pulley body having a belt engagement portion on the outer periphery of the pulley body; and
a base plate integrally provided to a pin protruding from a pulley body at a predetermined position to engage another member other than a pulley and being insert molded within the pulley body.

8. The power transmission device according to claim 7, wherein two or more pins protrude from the base plate.

9. The power transmission device according to claim 7, wherein the base plate include a protruding piece protruding in a direction crossing a direction of rotating the pulley.

10. The power transmission device according to claim 7,
wherein the pulley comprises a bearing as an insert component located on the inner periphery of the pulley and insert molded within the pulley body,
wherein the base plate has a fitting-into opening having the outer periphery of the bearing fitted thereinto,
wherein the base plate and the bearing as insert components are insert molded within the pulley body, with the base plate and the bearing fitted with each other.

11. The power transmission device according to claim 7,
wherein the base plate has windows.

12. The power transmission device according to claim 7,
wherein the base plate and the bearing include engagement portions engaging with each other for preventing relative rotation between the base plate and the bearing,
wherein the base plate and the bearing as insert components are insert molded within the pulley body, with the base plate and the bearing joined each other.
